# EUROPÄISCHE PATENTANMELDUNG

(11) **EP 4 764 184 A1**
(43) Veröffentlichungstag der Anmeldung: **24.06.2026**
(21) Anmeldenummer: 25220775.8
(22) Anmeldetag: 04.12.2025
(51) Int. Cl.: F02C 7/22, F02C 7/232

(54) **DÜSE FÜR EIN TRIEBWERK UND TRIEBWERK**

(30) Priorität: 17.12.2024 DE 102024138439
(71) Anmelder: Rolls-Royce Deutschland Ltd & Co KG, 15827 Blankenfelde-Mahlow (DE)
(72) Erfinder: CLEMEN, Carsten, 15827 Blankenfelde-Mahlow (DE)

(57) **Zusammenfassung**

Die Erfindung betrifft eine Düse (1) für ein Triebwerk, insbesondere eines Flugzeugs, mit einem entlang einer zentralen Längsachse (L) ausgerichteten Düsenhauptkörper (100) umfassend eine zentrale, auf der Längsachse (L) angeordnete Kraftstoffzufuhreinheit (4) mit einem Kraftstoffdüsenkörper (400) umfassend eine stromabseitige, zentrale Druckzerstäuberanordnung (401) zur Einspritzung von flüssigem Kraftstoff in eine Brennkammer unter dessen Zerstäubung,
die Kraftstoffzufuhreinheit (4) umfassend
- eine zentrale, auf der Längsachse (L) angeordnete Kraftstoffzuführung (200) mit einer zentralen Kraftstoffleitung (201), die in eine zentrale Einspritzanordnung (202) der Druckzerstäuberanordnung (401) mündet, und
- eine radial, insbesondere umlaufend, um die zentrale Kraftstoffzuführung (200) angeordnete zweite Kraftstoffzuführung (300) mit einer zweiten Kraftstoffleitung (301), die in eine zweite Einspritzanordnung (302) der Druckzerstäuberanordnung (401) mündet, wobei die zweite Kraftstoffleitung (301) eine radiale Innenwandung (303) und eine radiale Außenwandung (304) aufweist,

wobei, insbesondere umlaufend, um die Kraftstoffzufuhreinheit (4) zumindest ein Luftkanal (6) angeordnet ist. Eine gewichtsoptimierte Ausbildung einer Kraftstoffzu- und -abschaltung wird dadurch erreicht, dass in der zweiten Kraftstoffleitung (301) ein, insbesondere axial, verschiebbarer Schiebekörper (5) angeordnet ist, der in einer ersten Position die zweite Kraftstoffleitung (301) fluiddicht versperrt und in einer zweiten Position die zweite Kraftstoffleitung (301) für Kraftstoff passierbar freigibt

## Beschreibung

Die Erfindung betrifft eine Düse für ein Triebwerk, insbesondere eines Flugzeugs, nach den Merkmalen des Oberbegriffs des Anspruchs 1, sowie ein Triebwerk.

Insbesondere bei Düsenausbildungen mit sogenannten Druckzerstäubern kann es bei Luftfahrtanwendungen erforderlich sein, zwei Einspritzgeometrien vorzusehen, um die großen erforderlichen Änderungen des Kraftstoffmassenstroms im gesamten Triebwerksbetrieb abbilden zu können, von Start des Triebwerks bis hin zu Voll-Last im Flugbetrieb. In der Regel wird hierbei eine Einspritzgeometrie kontinuierlich betrieben und die zweite Einspritzgeometrie z. B. bei Erreichen eines bestimmten Grenzdruckes in der Kraftstoffperipherie geöffnet.

Aus dem Stand der Technik ist bekannt, für die Zu- und Abschaltung einer zweiten Kraftstoffzuführung ein Ventil einzusetzen.

Die US 9 488 107 zeigt eine Kraftstoffzuführung für eine Gasturbine mit einem Dosierventil zur Aufteilung eines Kraftstoffstroms auf einen ersten und einen zweiten Kraftstoffkreislauf.

Die US 7 007 476 zeigt einen Kraftstoffeinspritzkreis für einen Gasturbinenantrieb mit einer Stufen-Ventilanordnung zur Kraftstoffverteilung auf unterschiedliche Zonen eines Brenners.

Die US 5 732 730 zeigt ein Ventil zum Absperren und Regeln eines Kraftstoffflusses innerhalb eines Gasturbinensystems.

Nachteilig an derartigen Lösungen ist insbesondere das vergleichsweise hohe Gewicht.

Der Erfindung liegt mithin die Aufgabe zugrunde, eine Düse und ein Triebwerk der eingangs genannten Art bereitzustellen, bei welchen der Zu- und Abschaltmechanismus eines Kraftstoffmassenstroms gewichtsoptimiert ausgestaltet ist.

Die Aufgabe wird für die Düse mit den Merkmalen des Anspruchs 1 und für das Triebwerk mit den Merkmalen des Anspruchs 15 gelöst.

Bei der Düse ist vorgesehen, dass in der zweiten Kraftstoffleitung ein, insbesondere axial, verschiebbarer Schiebekörper angeordnet ist, der in einer ersten Position die zweite Kraftstoffleitung fluiddicht versperrt und in einer zweiten Position die zweite Kraftstoffleitung für Kraftstoff passierbar (vollständig) freigibt.

"Fluiddicht versperrt" bedeutet dabei druckentkoppelt, derart, dass insbesondere innerhalb des Abschnitts der zweiten Kraftstoffleitung stromauf der Versperrung und des Abschnitts stromab der Versperrung unterschiedliche Druckverhältnisse vorliegen. Zu diesem Zweck sind insbesondere geeignete, insbesondere umlaufende Dichtungen an dem Schiebekörper und/oder innerhalb der zweiten Kraftstoffleitung angeordnet.

Dabei bewirkt der Schiebekörper in der ersten Position eine vollständige Versperrung und in der zweiten Position die vollständige Öffnung der zweiten Kraftstoffleitung. Statische Zwischenpositionen des Schiebekörpers, mit einer Teilöffnung der zweiten Kraftstoffleitung, sind insbesondere nicht vorgesehen.

Mittels der erfindungsgemäßen Ausbildung ergibt sich vorteilhaft ein vergleichsweise äußerst leichter Mechanismus zur Zu- und Abschaltung des zweiten Kraftstoffmassenstroms.

Vorzugsweise ist vorgesehen, dass der Schiebekörper und/oder die zweite Kraftstoffleitung derart ausgelegt (aufeinander abgestimmt ausgebildet, dimensioniert und/oder angeordnet) sind, dass die Verschiebung des Schiebekörpers passiv (ohne aktive Steuerung und/oder Regelung), ausschließlich aufgrund innerhalb der zweiten Kraftstoffleitung im Betrieb vorliegender Druckverhältnisse, erfolgt. Bei diesem hydro-pneumatischen Verstellmechanismus wird der Druckunterschied zwischen einem Luftdruck in der Brennkammer und einem Kraftstoffdruck innerhalb des Kraftstoffzufuhrsystems ausgenutzt, welche jeweils beide auf den Schiebekörper wirken. Je nach Betrag dieser Druckkräfte resultiert eine Druckkraft als Verstellkraft, die den Schiebekörper in die erste Position stellt und/oder in dieser hält oder den Schiebekörper in die zweite Position verstellt und/oder in dieser hält.

Insbesondere ist/sind der Schiebekörper und/oder die zweite Kraftstoffleitung derart ausgelegt, dass sich die erste Position bei geringen Triebwerksleistungen, zumindest einschließlich Leerlauf, einstellt, und die zweite Position bei höheren Leistungen, oberhalb der Leerlaufleistung, einstellt. Insbesondere erfolgt der Übergang von der ersten auf die zweite Position bei einer derartigen Triebwerksleistung, bei der der Kraftstoffstrom durch die zentrale Kraftstoffzuführung alleine nicht mehr ausreicht bzw. ein nicht zu tolerierender, hoher Kraftstoffvordruck erforderlich wäre. Dies ist triebwerks- und betriebsabhängig entsprechend angepasst auszulegen.

Vorzugsweise ist vorgesehen, dass der Schiebekörper zum axialen Gleiten an der radialen Innenwandung oder an der radialen Außenwandung axial verschieblich angeordnet, z. B. axial verschieblich gelagert, ist, wobei eine gesonderte Lagerung bei passgenauer Fertigung nicht notwendigerweise erforderlich ist.

Zur Verringerung eines nicht durchströmten Volumens in der ersten Position kann vorgesehen sein, dass der Schiebekörper in einem stromabseitigen Teil (z. B. einer stromabseitigen Hälfte oder eines stromabseitigen Drittels) der Kraftstoffzufuhreinheit und/oder des Düsenhauptkörpers angeordnet ist, insbesondere nahe (z. B. ausschließlich getrennt durch eine Anschlaganordnung und/oder mit einem maximalen Abstand von einer halben Länge des Schiebekörpers) an der zentralen und/oder an der zweiten Einspritzanordnung. Auf diese Weise erfolgt die Unterbrechung des Kraftstoffflusses vorteilhaft im Bereich der Spitze des Düsenkörpers unter Bildung einer vergleichsweise kleinen zeitweise nicht durchströmten Kavität.

In einer bevorzugten Ausbildung ist vorgesehen, dass der Schiebekörper eine stromaufseitige Schulter mit einer radialen Höhe und eine stromabseitige Schulter mit einer radialen Höhe aufweist, die durch einen Mittelsteg mit geringerer radialer Höhe als die Höhen (der Schultern) miteinander verbunden sind. Beispielsweise beträgt die radiale Höhe des Mittelstegs maximal das 0,5-fache der radialen Höhe der stromaufseitigen Schulter. Dies trägt zu einer vorteilhaften Dimensionierung der kräftewirksamen Flächen an dem Schiebekörper (der radial ausgerichteten Flächen des Schiebekörpers, an welchen im Betrieb fluidmechanische Druckkräfte angreifen können) bei.

Eine zweckmäßige Ausbildungsvariante besteht darin, dass in der zweiten Kraftstoffleitung an der radialen Innenwandung oder an der radialen Außenwandung (d. h. auf der schiebekörperseitigen Wandung, an welcher der Schiebekörper gleitet) eine stromaufseitige Anschlaganordnung, zum axialen Anschlag des Schiebekörpers insbesondere in der zweiten Position, und/oder eine stromabseitige Anschlaganordnung, zum axialen Anschlag des Schiebekörpers insbesondere in der ersten Position, angeordnet ist/sind. Die Anschlaganordnung/en weist/weisen vorzugsweise jeweils diskret gleichmäßig über den Umfang der schiebekörperseitigen Wandung verteilte, z. B. quaderförmige, Einzelelemente auf, beispielsweise maximal sechs Stück an der Zahl, um auch in der Position im Anschlag möglichst geringe Anteile der kräftewirksamen Flächen an dem Schiebekörper zu verdecken.

Vorzugsweise ist in der zweiten Kraftstoffleitung, insbesondere an der der zumindest einen Anschlaganordnung (und dem Schiebekörper) gegenüberliegenden Wandung (d. h. Innenwandung oder Außenwandung), ein radialer Vorsprung als eine Art Dichtsattel mit einer derartigen radialen Höhe angeordnet, dass in der ersten Position in Zusammenwirken mit dem Schiebekörper, insbesondere mit der stromaufseitigen Schulter, eine fluiddichte Versperrung innerhalb der zweiten Kraftstoffleitung gebildet ist. Vorzugsweise ist zu diesem Zweck an der in den zweiten Kraftstoffkanal weisenden Seite des radialen Vorsprungs eine umlaufende Dichtung vorhanden.

In einer zweckmäßigen Ausbildungsvariante ist vorgesehen, dass in der zweiten Position der radiale Vorsprung im axialen Bereich des Mittelstegs und von der stromaufseitigen Schulter und/oder von der stromabseitigen Schulter beabstandet positioniert ist, wobei insbesondere die axiale Ausdehnung des radialen Vorsprungs kleiner ist als die axiale Ausdehnung des Mittelstegs. Auf diese Weise ist in der zweiten Position ein Strömungskanal um die stromaufseitige Schulter, zwischen dem radialen Vorsprung und dem Mittelsteg und um die stromabseitige Schulter gebildet.

Für die Verstellung vorteilhafte Druckverhältnisse ergeben sich, wenn die radiale Höhe der stromaufseitigen Schulter geringer ist als die radiale Höhe der stromabseitigen Schulter und/oder wenn eine radiale Höhe der stromaufseitigen Anschlaganordnung und/oder eine radiale Höhe der stromabseitigen Anschlaganordnung geringer ist/sind als eine radiale Höhe des radialen Vorsprungs und/oder wenn die radiale Höhe der stromaufseitigen Anschlaganordnung und/oder die radiale Höhe der stromabseitigen Anschlaganordnung maximal 0,2 x H1 (der radialen Höhe der stromaufseitigen Schulter), vorzugsweise maximal 0,15 x H1 beträgt, wobei vorzugsweise eine jeweilige axiale Breite und/oder Breite der Einzelelemente in Umlaufrichtung entsprechend der jeweiligen radialen Höhe beträgt. Die Einzelelemente der stromaufseitigen und der stromabseitigen Anschlaganordnung können eine gleiche radiale Höhe aufweisen.

Zur Absaugung von Kraftstoff in der ersten, den Kraftstofffluss unterbrechenden Position kann vorteilhaft vorgesehen sein, dass bei Anordnung des Schiebekörpers an der Außenwandung zumindest ein Verbindungskanal zwischen dem (an die Außenwandung angrenzenden) Luftkanal und der zweiten Kraftstoffleitung vorhanden ist, mit einem in der Außenwandung gebildeten ersten Abschnitt und mit einem in dem Schiebekörper, insbesondere in dem Mittelsteg, gebildeten zweiten Abschnitt, deren einander zugewandte Öffnungen in der ersten Position zur Öffnung des Verbindungskanals zur Fluidleitung übereinanderliegen und in der zweiten Position zum Verschluss des Verbindungskanals, insbesondere axial, versetzt zueinander angeordnet sind, wobei der erste Abschnitt mittels des Schiebekörpers, insbesondere mittels des Mittelstegs, verschlossen ist. Der Verbindungskanal dient vorteilhaft zur Luftspülung der entstehenden Kavität in der ersten Position, bei Unterbrechung des Kraftstoffflusses.

In einer vorteilhaften Ausbildungsvariante zur Vermeidung von Verkokung ist an mit Kraftstoff überströmten Wandabschnitten zumindest bereichsweise eine Beschichtung zur Vermeidung der Anhaftung von Kraftstoffresten, z. B. Teflon, vorhanden.

Insbesondere ist zwischen dem außen um die Kraftstoffzufuhreinheit umlaufenden Luftkanal und der Kraftstoffzufuhreinheit zumindest ein Hitzeschutz, beispielsweise zumindest ein innerhalb einer Außenwandung angeordneter, z. B. mit Luft gefüllter, Hohlraum, vorhanden, um die Kraftstoffzufuhreinheit vor der heißen Umgebungsluft abzuschirmen, eine übermäßige Erwärmung des Kraftstoffes zu verringern und auf diese Weise Verkokung zu vermeiden. Vorzugsweise ist der Hitzeschutz axial zumindest abschnittsweise im Bereich des Schiebekörpers angeordnet.

Vorzugsweise ist stromauf der Kraftstoffzufuhreinheit eine gemeinsame Kraftstoffzuleitung, z. B. bis an den Düsenhalter und/oder an den Düsenhauptkörper, vorhanden, die stromauf oder innerhalb des Düsenhauptkörpers auf die zentrale Kraftstoffleitung und die zweite Kraftstoffleitung aufgezweigt ist.

Nachfolgend wird die Erfindung anhand von Ausführungsbeispielen unter Bezugnahme auf die Zeichnungen näher erläutert. Es zeigen:
- Fig. 1: eine schematische Darstellung eines Teils einer Düse, mit einem stromabseitigen Teil einer Kraftstoffzufuhranordnung, in Ausbildung gemäß dem Stand der Technik (dargestellt in der unteren Hälfte der Figur), und in einer erfindungsgemäßen Ausbildungsvariante (dargestellt in der oberen Hälfte der Figur) mit einem Schiebekörper in einer ersten Position,
- Fig. 2: eine schematische Darstellung eines Teils der Düse gemäß der erfindungsgemäßen Ausbildungsvariante in Fig. 1, mit dem Schiebekörper in einer ersten Position, unter Illustration von Dimensionierungen,
- Fig. 3: eine schematische Darstellung eines Teils der Düse gemäß Fig. 1, mit dem Stand der Technik (dargestellt in der unteren Hälfte der Figur) und erfindungsgemäß (dargestellt in der oberen Hälfte der Figur), mit dem Schiebekörper in einer Zwischenposition,
- Fig. 4: eine schematische Darstellung eines Teils der Düse gemäß Fig. 1, mit dem Stand der Technik (dargestellt in der unteren Hälfte der Figur) und erfindungsgemäß (dargestellt in der oberen Hälfte der Figur), mit dem Schiebekörper in einer weiteren Zwischenposition,
- Fig. 5: eine schematische Darstellung eines Teils der Düse gemäß Fig. 1, mit dem Stand der Technik (dargestellt in der unteren Hälfte der Figur) und erfindungsgemäß (dargestellt in der oberen Hälfte der Figur), mit dem Schiebekörper in einer zweiten Position,
- Fig. 6: eine schematische Darstellung eines Teils der Düse, mit dem stromabseitigen Teil einer Kraftstoffzufuhranordnung, in Ausbildung gemäß dem Stand der Technik (dargestellt in der unteren Hälfte der Figur), und in einer weiteren erfindungsgemäßen Ausbildungsvariante (dargestellt in der oberen Hälfte der Figur) mit einem Schiebekörper in einer ersten Position,
- Fig. 7: eine schematische Darstellung eines Teils der Düse gemäß Fig. 6, mit dem Stand der Technik (dargestellt in der unteren Hälfte der Figur) und erfindungsgemäß (dargestellt in der oberen Hälfte der Figur), mit dem Schiebekörper in einer Zwischenposition, und
- Fig. 8: eine schematische Darstellung eines Teils der Düse gemäß Fig. 6, mit dem Stand der Technik (dargestellt in der unteren Hälfte der Figur) und erfindungsgemäß (dargestellt in der oberen Hälfte der Figur), mit dem Schiebekörper in der zweiten Position.

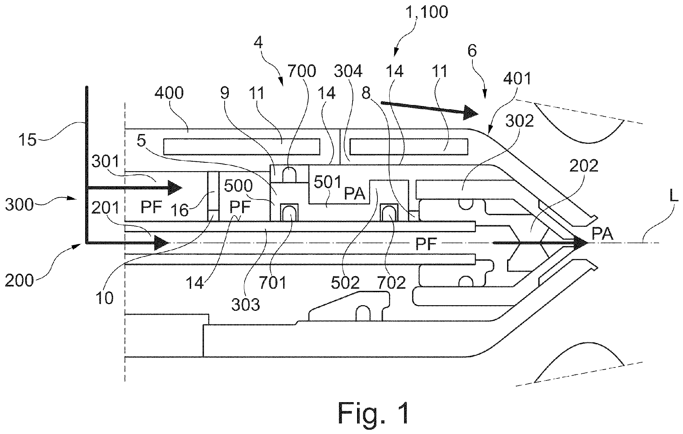

Fig. 1 zeigt einen Teil einer Düse 1 zum Einsatz in einem Triebwerk insbesondere eines Flugzeugs, die zum Betrieb mit einem flüssigen Kraftstoff ausgebildet ist. Die Düse 1 umfasst einen entlang einer zentralen Längsachse L ausgerichteten Düsenhauptkörper 100, welcher insbesondere an einem (hier nicht gezeigten) Düsenhalter angeordnet sein kann.

Der Düsenhauptkörper 100 weist eine zentral angeordnete, auf der Längsachse L verlaufende Kraftstoffzufuhreinheit 4 mit einem Kraftstoffdüsenkörper 400 auf. Der Kraftstoffdüsenkörper 400 umfasst an seinem stromabseitigen Ende eine zentrale Druckzerstäuberanordnung 401 zur Einspritzung des flüssigen Kraftstoffes in eine (hier nicht gezeigte) Brennkammer unter dessen Zerstäubung. Die Druckzerstäuberanordnung 401 kann als separates Bauteil an dem restlichen Kraftstoffdüsenkörper 400 geeignet befestigt sein.

Umlaufend um die Kraftstoffzufuhreinheit 4 ist zumindest ein Luftkanal 6 angeordnet.

Die Düse 1 mit der Kraftstoffzufuhreinheit 4 umfasst zwei Einspritzgeometrien, mit jeweils einer Kraftstoffzuführung 200, 300, um eine erforderliche Änderung des Kraftstoffmassenstroms von Start bis Volllast des Flugzeuges abbilden zu können. Den Einspritzgeometrien ist vorzugsweise stromauf eine gemeinsame Kraftstoffzuleitung 15 zugeordnet, welche in zwei Kraftstoffleitungen, jeweils eine pro Kraftstoffzuführung 200, 300, aufteilt.

Die erste, zentral (auf der Längsachse L) angeordnete Kraftstoffzuführung 200 weist eine zentrale, insbesondere zylindrische Kraftstoffleitung 201 auf, die auf der Längsachse L verläuft. Die Kraftstoffleitung 201 mündet in eine zentrale, auf der Längsachse L angeordnete Einspritzanordnung 202 der Druckzerstäuberanordnung 401 mit zumindest einem (hier nicht näher dargestellten) Einspritzkanal des Kraftstoffes in den Oxidator und/oder in die Brennkammer.

Die zweite Kraftstoffzuführung 300 ist vorzugsweise vollständig umlaufend um die zentrale Kraftstoffzuführung 200 angeordnet und umfasst eine insbesondere ringförmig umlaufend um die zentrale Kraftstoffleitung 201 angeordnete, zweite Kraftstoffleitung 301. Dabei bildet vorzugsweise die zentrale Kraftstoffleitung 201 eine Innenwandung 303 der zweiten Kraftstoffleitung 301, die einer radialen Außenwandung 304 der zweiten Kraftstoffleitung 301 gegenüberliegt. Somit ist zwischen der zentrale Kraftstoffleitung 201 und der zweiten Kraftstoffleitung 301 kein weiterer Strömungskanal angeordnet. Die zweite Kraftstoffleitung 301 mündet in eine zweite Einspritzanordnung 302 der Druckzerstäuberanordnung 401. Die zweite Einspritzanordnung 302 ist insbesondere umlaufend um die erste Einspritzanordnung 202 angeordnet und umfasst zumindest einen hier nicht dargestellten Einspritzkanal des Kraftstoffes in den Oxidator und/oder in die Brennkammer.

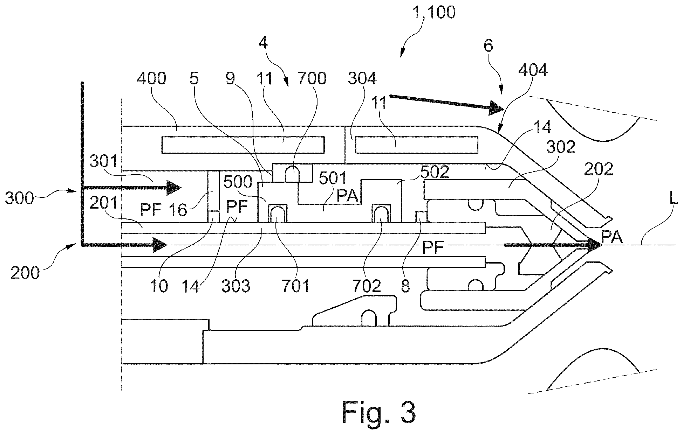

Fig. 1 (wie auch nachfolgend Fig. 3 bis Fig. 8) zeigt in einer bezüglich der bildlichen Darstellung unteren Hälfte eine gemäß dem Stand der Technik bekannte Ausbildung der Düse 1, wobei die zentrale Kraftstoffzuführung 200 und die zweite Kraftstoffzuführung 300 parallel mit dem Kraftstoff durchströmt werden können. Zur optionalen Öffnung oder Schließung insbesondere der zweiten Kraftstoffzuführung 300 in Abhängigkeit der Triebwerksleistung ist gemäß dem Stand der Technik der zweiten Kraftstoffzuführung 300 stromauf des in Fig. 1 gezeigten Bereichs ein Ventil zugeordnet (in Fig. 1 nicht gezeigt).

In einer bezüglich der bildlichen Darstellung oberen Hälfte zeigt Fig. 1 eine erfindungsgemäße Ausbildung der Düse 1, wobei in der zweiten Kraftstoffleitung 301 insbesondere ringförmig umlaufend ein axial verschiebbarer Schiebekörper 5 angeordnet ist. Fig. 1 zeigt den Schiebekörper 5 in einer ersten Position, in welcher der Schiebekörper 5 die zweite Kraftstoffleitung fluiddicht versperrt, d. h. wobei eine Druckentkopplung des stromaufseitigen Kanalabschnitts von dem stromabseitigen Kanalabschnitt der Kraftstoffleitung 301 vorliegt. Im Betrieb liegt dabei in dem stromaufseitigen Kanalabschnitt ein Kraftstoffdruck PF und in dem stromabseitigen Kanalabschnitt ein Luftdruck PA an, welcher auch innerhalb des Brennraums vorliegt.

Der Schiebekörper 5 ist zur Verschiebung mittels eines hydro-pneumatischen Schiebemechanismus ausgebildet. Dabei ist/sind der Schiebekörper 5 und/oder die zweite Kraftstoffleitung 201 derart ausgelegt (insbesondere aufeinander abgestimmt ausgebildet, dimensioniert und/oder angeordnet), dass die Verschiebung des Schiebekörpers 5 passiv, ausschließlich aufgrund der sich im Betrieb einstellenden Druckverhältnisse, ohne aktive Steuerung und/oder Regelung, erfolgt. Die in Fig. 1 gezeigte erste Position stellt sich dabei bei geringen Triebwerksleistungen ein, zumindest einschließlich Leerlauf, wobei der Kraftstoff ausschließlich über die zentrale Kraftstoffzuführung 200 der Brennkammer zugeführt wird.

Der Schiebekörper 5 ist insbesondere in der Spitze des Kraftstoffdüsenkörpers 400, in einem stromabseitigen Drittel der Kraftstoffzufuhreinheit 4 und/oder des Düsenhauptkörpers 100 angeordnet.

Bei dem in Fig. 1 gezeigten Ausführungsbeispiel ist der Schiebekörper 5 zum axialen Gleiten entlang an der radialen Innenwandung 303 angeordnet, wobei er insbesondere entsprechend axial verschieblich gelagert ist.

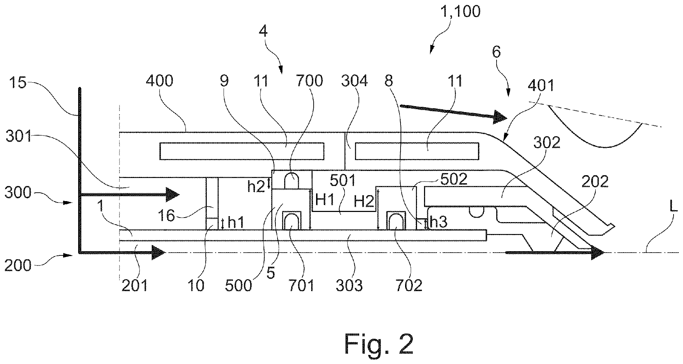

Fig. 2 zeigt ausschließlich eine Hälfte eines Längsschnitts der Düse 1 in der erfindungsgemäßen Ausbildung nach Fig. 1, wobei die Dimensionierung des Schiebekörpers 5 bezeichnet ist. Der Schiebekörper 5 weist eine stromaufseitige Schulter 500 mit einer radialen Höhe H1 sowie eine stromabseitige Schulter 502 mit einer radialen Höhe H2 auf. Die beiden Schultern 500, 502 sind durch einen Mittelsteg 501 miteinander verbunden, welcher eine geringere radiale Höhe als die Höhen H1, H2 der Schultern 500, 502 aufweist, beispielsweise maximal das 0,5-fache der Höhe H1. Vorzugsweise ist der Schiebekörper 5 mittels zumindest einer, beispielsweise zweier umlaufender Dichtungen 701, 702 gegenüber der Wandung abgedichtet, auf welcher er gleitet (nachfolgend auch als "schiebekörperseitige Wandung" bezeichnet), in Fig. 1 bis Fig. 5 gegenüber der Innenwandung 303.

An der schiebekörperseitigen Wandung, in Fig. 1 bis Fig. 5 der Innenwandung 303, sind insbesondere eine stromaufseitige Anschlaganordnung 10, mit einer radialen Höhe h1 (vgl. Fig. 2), und eine stromabseitige Anschlaganordnung 8, mit einer radialen Höhe h3 (vgl. Fig. 2), angeordnet. Die Anschlaganordnungen 8, 10 können insbesondere diskrete, in Umlaufrichtung gleichmäßig verteilte Einzelelemente aufweisen, z. B. maximal sechs an der Zahl.

Auf axialer Position der stromaufseitigen Anschlaganordnung 10 können insbesondere bei Ausbildung der Druckzerstäuberanordnung 401 als separates Bauteil zweckmäßigerweise aus konstruktionstechnischen Gründen diskrete Stege 16 in Umlaufrichtung verteilt oder ein zusammenhängender, umlaufender Steg 16 mit vergleichsweise großen durchströmbaren Kraftstofföffnungen (zur Vermeidung eines nennenswerten Druckverlusts) vorhanden sein. Die stromaufseitige Anschlaganordnung 10 ist dabei Teil desjenigen Abschnitts der radialen Außenwandung 304, welcher dem Teil des Kraftstoffdüsenkörpers 400 stromauf der Druckzerstäuberanordnung 401 zugeordnet ist.

Auf der der schiebekörperseitigen Wandung gegenüberliegenden Wandung, in Fig. 1 bis Fig. 5 an der radialen Außenwandung 304, ragt umlaufend ein radialer Vorsprung 9 in Funktion eines Dichtsattels in die zweite Kraftstoffleitung 301 hinein. Der radiale Vorsprung 9 ist derart auf den Schiebekörper 5 abgestimmt, dass in Zusammenwirken mit der stromaufseitigen Schulter 500 die fluiddichte Versperrung innerhalb der zweiten Kraftstoffleitung 301 gebildet ist. Dabei entspricht die radiale Höhe H1 der stromaufseitigen Schulter 500 der durchströmbaren radialen Höhe im Bereich des radialen Vorsprungs 9, mit entsprechender Toleranz, um die axiale Verschiebbarkeit zu gewährleisten. An dem radialen Vorsprung 9 ist insbesondere eine umlaufende Dichtung 700 angeordnet.

In Fig. 2 sind weiterhin die radialen Höhen des radialen Vorsprungs 9 und der Anschlaganordnungen 8 und 10 bezeichnet. Ein geeignetes Kräftegleichgewicht, für eine geeignete Positionierung des Schiebekörpers 5 im Betrieb, ist mit bestimmten Verhältnissen der radialen Höhen erreichbar. Dabei ist insbesondere die radiale Höhe H1 der stromaufseitigen Schulter 500 kleiner als die radiale Höhe H2 der stromabseitigen Schulter 502.

Die radiale Höhe h1 der stromaufseitigen Anschlaganordnung 10 und die radiale Höhe der stromabseitigen Anschlaganordnung h3 sind beispielsweise gleich groß und geringer als die Höhe H1. Beispielsweise betragen die Höhen h1 und/oder h3 maximal 0,2 x H1, vorzugsweise maximal 0,15 x H1. Vorzugsweise ist die Höhe h1 kleiner als die radiale Höhe h2 des radialen Vorsprungs 9.

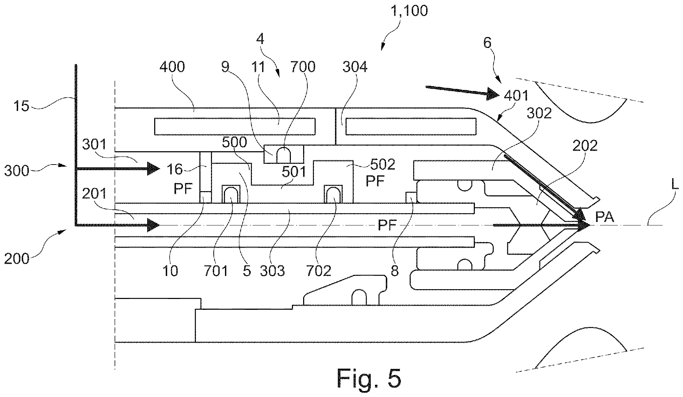

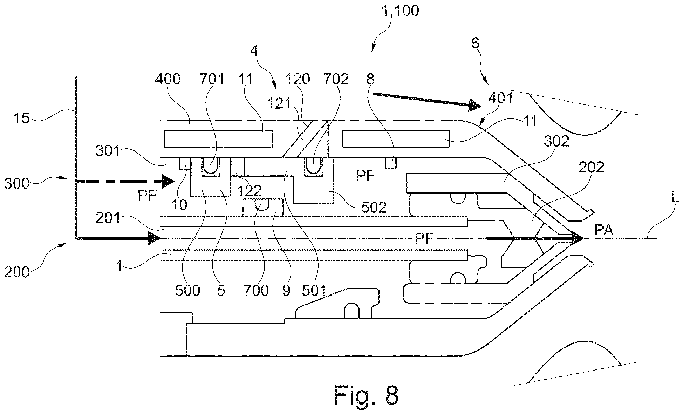

Auf diese Weise ergibt sich mittels der an den radial ausgerichteten ("kräftewirksamen") Seiten des Schiebekörpers 5 angreifenden Druckkräften die erste Position (vgl. Fig. 1, Fig. 2 und Fig. 6) für Betriebspunkte mit geringen Triebwerksleistungen, einschließlich Leerlauf, und die zweite Position (vgl. Fig. 5 und Fig. 8) für Betriebspunkte mit hohen Triebwerksleistungen. Hierbei decken definitionsgemäß die "geringen Triebwerksleistungen, und die "hohen Triebwerksleistungen" den gesamten Betriebsbereich des entsprechenden Triebwerks ab. Die genaue Auslegung, unter exakter Dimensionierung der Flächenverhältnisse, ist dabei abgestimmt auf ein konkretes Triebwerk vorzunehmen.

In der in Fig. 1, Fig. 2 und Fig. 6 gezeigten, ersten Position schlägt der Schiebekörper 5 an der stromabseitigen Anschlaganordnung 8 an. Mittels der stromabseitigen Anschlaganordnung 8 ist der Schiebekörper 5 von der zentralen Einspritzanordnung 202 und/oder der zweiten Einspritzanordnung 302 axial beabstandet. Auf diese Weise können die im Betrieb wirkenden Druckkräfte auch in der ersten Position an der stromabseitigen, radial ausgerichteten Abschlusswand des Schiebekörpers 5 angreifen und zur Bildung des Kräftegleichgewichts beitragen.

In der Außenwandung 304 kann insbesondere im axialen Bereich eines radialen Vorsprungs 9 und stromauf und/oder stromab desselben ein Hitzeschutz 11, insbesondere in Form zumindest eines luftgefüllten Hohlraums, angeordnet sein. Der Hohlraum 11 dient zur Abschirmung eines Innenraums des Kraftstoffdüsenkörpers 400 gegenüber heißer, durch den Luftkanal 6 strömender Luft. So kann mittels des Hitzeschutzes 11 eine Aufheizung des Kraftstoffes verringert und eine Verkokung vermieden werden.

An mit Kraftstoff überströmten Wandabschnitten innerhalb der zweiten Kraftstoffzuführung 300 kann beispielsweise zumindest bereichsweise eine Beschichtung 14, z. B. Teflon, vorhanden sein, um eine Anhaftung von Kraftstoffresten zu vermeiden.

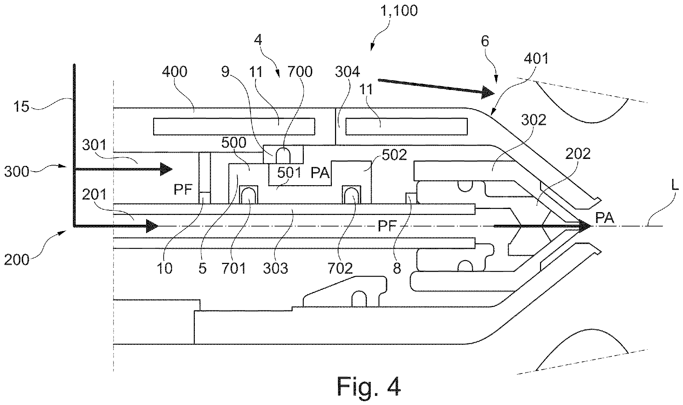

Fig. 3 und Fig. 4 zeigen den Teil der Düse 1 mit der in Fig. 1 dargestellten Variante der erfindungsgemäßen Ausbildung in jeweils einer Zwischenposition, wobei der Schiebekörper 5 aufgrund der sich ändernden resultierenden Druckkräfte aus der ersten Position in die zweite Position entgegen der Strömungsrichtung verschoben wird.

Fig. 5 zeigt den Teil der Düse 1 mit der in Fig. 1 dargestellten Variante der erfindungsgemäßen Ausbildung in der zweiten Position, wobei die zweite Kraftstoffleitung 301 vollständig für Kraftstoff durchströmbar geöffnet ist. Der Schiebekörper 5 schlägt dabei axial an die stromaufseitige Anschlaganordnung 10 an.

In der zweiten Position ist der radiale Vorsprung 9 in dem axialen Bereich des Mittelstegs 501 sowie von der stromaufseitigen Schulter 500 und der stromabseitigen Schulter 502 beabstandet positioniert. Die axiale Ausdehnung des radialen Vorsprungs 9 ist kleiner als die axiale Ausdehnung des Mittelstegs 501. Auf diese Weise ist in der zweiten Kraftstoffleitung 501 der Kraftstoff-Strömungskanal um die stromaufseitige Schulter 500, zwischen dem Mittelsteg 501 und dem radialen Vorsprung 9 und um die stromabseitige Schulter 502 gebildet.

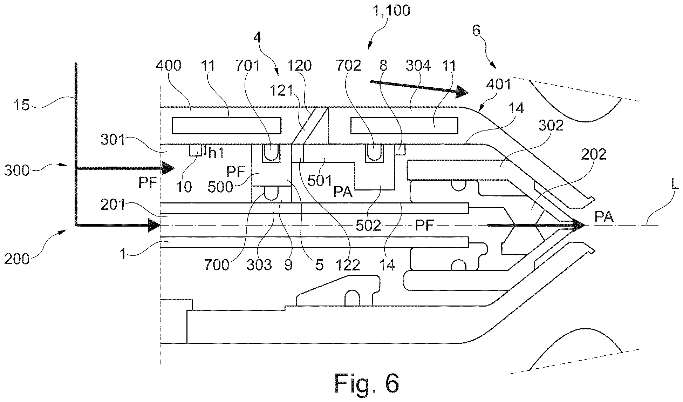

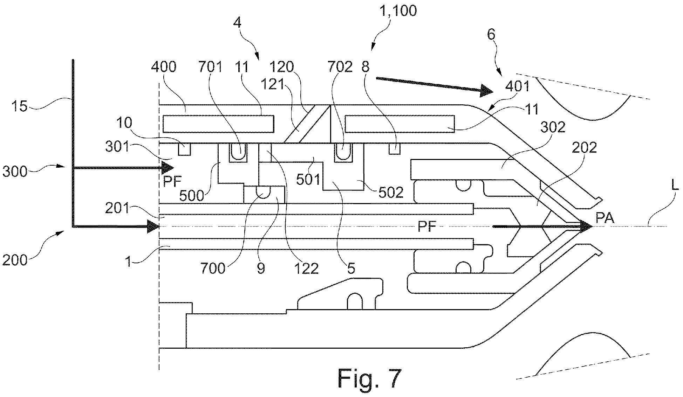

Fig. 6 bis Fig. 8 zeigen eine alternative erfindungsgemäße Ausbildungsvariante, wobei der Schiebekörper 5 ebenfalls ringförmig umlaufend ausgebildet jedoch zum Gleiten an der Außenwandung 304, als schiebekörperseitige Wandung, angeordnet ist. Entsprechend sind die Anschlaganordnungen 8, 10 an der Außenwandung 304 und der radiale Vorsprung 9 an der Innenwandung 9 angeordnet. Gemäß Fig. 6 befindet sich der Schiebekörper 5 in der ersten Position, mit geschlossener zweiter Kraftstoffleitung 301, gemäß Fig. 7 in einer Zwischenposition und gemäß Fig. 8 in der zweiten Position, mit geöffneter zweiter Kraftstoffleitung 301.

Bei der in Fig. 6 bis Fig. 8 gezeigten Ausbildungsvariante kann vorteilhaft zwischen dem Luftkanal 6, der die Außenwandung 304 umgibt, und der zweiten Kraftstoffleitung 301 zumindest ein verschließbarer Verbindungskanal 120 vorhanden sein. Vorzugsweise sind mehrere Verbindungskanäle 120 diskret gleichmäßig über den Umfang der Außenwandung 304 verteilt. Dabei ist ein erster Abschnitt 121 des Verbindungskanals 120 in der Außenwandung 304 gebildet. Der erste Abschnitt 121 ist beispielsweise axial-radial entgegen der Strömungsrichtung innerhalb des Luftkanals 6 ausgerichtet. Ein zweiter Abschnitt 122 des Verbindungskanals 120 ist in dem Schiebekörper 5, insbesondere in dessen Mittelsteg 501 gebildet. In der in Fig. 6 gezeigten, ersten Position liegen die einander zugewandten Öffnungen der Abschnitte 121, 122 übereinander, sodass ein durchgängiger Kanal gebildet und der Verbindungskanal 120 geöffnet ist. Im Betrieb wird aufgrund der vergleichsweise hohen Luftgeschwindigkeit eine Sogwirkung auf Seiten des Luftkanals 6 erzeugt und dadurch verbleibender Kraftstoff aus der in der zweiten Kraftstoffleitung 301 gebildeten Kavität gesaugt. Somit dient der Verbindungskanal 120 vorteilhaft zur Luftspülung der entstehenden Kavität in der ersten Position, bei Unterbrechung des Kraftstoffflusses.

Wie Fig. 7 und Fig. 8 zeigen, verschiebt sich in der Zwischenposition und in der zweiten Position der zweite Abschnitt 122 des Verbindungskanals 120 derart, dass der Kanal unterbrochen und der Verbindungskanal 120 verschlossen ist.

Im Betrieb befindet sich vor dem Start, beispielsweise im Leerlauf, der Schiebekörper 5 in der ersten Position. Kraftstoff wird ausschließlich über die zentrale Kraftstoffzuführung 200 der Brennkammer zugeführt. Der Kraftstoffdruck PF wirkt stromauf des radialen Vorsprungs 9 und der Luftdruck PA stromab des radialen Vorsprungs 9 auf den Schiebekörper 5 derart, dass der Schiebekörper 5 mittels der resultierenden Druckkraft gegen die stromabseitige Anschlaganordnung 8 gedrückt und in der ersten Position gehalten wird.

Bei Erhöhung der Triebwerksleistung erhöht sich der Luftdruck PA innerhalb der Brennkammer. Bei einer bestimmten Höhe des Luftdrucks PA und/oder des Kraftstoffdrucks PF resultiert eine axiale Verstellkraft, welche den Schiebekörper 5 über Zwischenpositionen in die zweite Position verschiebt. In der zweiten Position ist der Schiebekörper 5 gegen die stromaufseitige Anschlaganordnung 10 gedrückt. Innerhalb der zweiten Position ist die zweite Kraftstoffleitung 301 insbesondere vollständig geöffnet und wird von Kraftstoff durchströmt. Somit wird der Brennkammer in der zweiten Position des Schiebekörpers 5 mittels der zentralen Kraftstoffzuführung 200 und der zweiten Kraftstoffzuführung 300 Kraftstoff zugeführt.

Zusammenfassend erlaubt die erfindungsgemäße Ausbildung der Düse 100 eine vergleichsweise leichte, sichere Zu- und Abschaltung der zweiten Kraftstoffzuführung 300.

### Bezugszeichenliste

- 1: Düse
- 100: Düsenhauptkörper
- 200: zentrale Kraftstoffzuführung
- 201: zentrale Kraftstoffleitung
- 202: zentrales Einspritzanordnung
- 300: zweite Kraftstoffzuführung
- 301: zweite Kraftstoffleitung
- 302: zweites Einspritzanordnung
- 303: Innenwandung
- 304: Außenwandung
- 4: Kraftstoffzufuhreinheit
- 400: Kraftstoffdüsenkörper
- 401: Druckzerstäuberanordnung
- 5: Schiebekörper
- 500: stromaufseitige Schulter
- 501: Mittelsteg
- 502: stromabseitige Schulter
- 6: Luftkanal
- 700: Dichtung
- 701: Dichtung
- 702: Dichtung
- 8: Anschlaganordnung
- 9: radialer Vorsprung
- 10: Anschlaganordnung
- 11: Hitzeschutz
- 120: Verbindungskanal
- 121: Erster Abschnitt
- 122: Zweiter Abschnitt
- 14: Beschichtung
- 15: Kraftstoffzuleitung
- 16: Steg
- H1: Höhe
- H2: Höhe
- h1: Höhe
- h2: Höhe
- h3: Höhe
- L: Längsachse
- PF: Kraftstoffdruck
- PA: Luftdruck

## Patentansprüche

1. Düse (1) für ein Triebwerk, insbesondere eines Flugzeugs, mit einem entlang einer zentralen Längsachse (L) ausgerichteten Düsenhauptkörper (100) umfassend eine zentrale, auf der Längsachse (L) angeordnete Kraftstoffzufuhreinheit (4) mit einem Kraftstoffdüsenkörper (400) umfassend eine stromabseitige, zentrale Druckzerstäuberanordnung (401) zur Einspritzung von flüssigem Kraftstoff in eine Brennkammer unter dessen Zerstäubung,
die Kraftstoffzufuhreinheit (4) umfassend
- eine zentrale, auf der Längsachse (L) angeordnete Kraftstoffzuführung (200) mit einer zentralen Kraftstoffleitung (201), die in eine zentrale Einspritzanordnung (202) der Druckzerstäuberanordnung (401) mündet, und
- eine radial, insbesondere umlaufend, um die zentrale Kraftstoffzuführung (200) angeordnete zweite Kraftstoffzuführung (300) mit einer zweiten Kraftstoffleitung (301), die in eine zweite Einspritzanordnung (302) der Druckzerstäuberanordnung (401) mündet, wobei die zweite Kraftstoffleitung (301) eine radiale Innenwandung (303) und eine radiale Außenwandung (304) aufweist,
wobei, insbesondere umlaufend, um die Kraftstoffzufuhreinheit (4) zumindest ein Luftkanal (6) angeordnet ist,
**dadurch gekennzeichnet,**
**dass** in der zweiten Kraftstoffleitung (301) ein, insbesondere axial, verschiebbarer Schiebekörper (5) angeordnet ist, der in einer ersten Position die zweite Kraftstoffleitung (301) fluiddicht versperrt und in einer zweiten Position die zweite Kraftstoffleitung (301) für Kraftstoff passierbar freigibt.

2. Düse (1) nach Anspruch 1,
**dadurch gekennzeichnet,**
**dass** der Schiebekörper (5) und/oder die zweite Kraftstoffleitung (301) derart ausgelegt sind, dass die Verschiebung des Schiebekörpers (5) passiv, ausschließlich aufgrund innerhalb der zweiten Kraftstoffleitung (301) im Betrieb vorliegender Druckverhältnisse, erfolgt.

3. Düse (1) nach Anspruch 2,
**dadurch gekennzeichnet,**
**dass** der Schiebekörper (5) und/oder die zweite Kraftstoffleitung (301) derart ausgelegt sind, dass sich die erste Position bei geringen Triebwerksleistungen, zumindest einschließlich Leerlauf, einstellt, und die zweite Position bei höheren Leistungen, über Leerlauf, einstellt.

4. Düse (1) nach einem der vorhergehenden Ansprüche,
**dadurch gekennzeichnet,**
**dass** der Schiebekörper (5) zum axialen Gleiten an der radialen Innenwandung (303) oder an der radialen Außenwandung (304) axial verschieblich angeordnet, z. B. axial verschieblich gelagert, ist.

5. Düse (1) nach einem der vorhergehenden Ansprüche,
**dadurch gekennzeichnet,**
**dass** der Schiebekörper (5) in einem stromabseitigen Teil der Kraftstoffzufuhreinheit (4) und/oder des Düsenhauptkörpers (100) angeordnet ist, insbesondere nahe an der zentralen und/oder an der zweiten Einspritzanordnung (202, 302).

6. Düse (1) nach einem der vorhergehenden Ansprüche,
**dadurch gekennzeichnet,**
**dass** der Schiebekörper (5) eine stromaufseitige Schulter (500) mit einer radialen Höhe (H1) und eine stromabseitige Schulter (502) mit einer radialen Höhe (H2) aufweist, die durch einen Mittelsteg (501) mit geringerer radialer Höhe als die Höhen (H1) und (H2) miteinander verbunden sind.

7. Düse (1) nach einem der vorhergehenden Ansprüche,
**dadurch gekennzeichnet,**
**dass** in der zweiten Kraftstoffleitung (301) an der radialen Innenwandung (303) oder an der radialen Außenwandung (304) eine stromaufseitige Anschlaganordnung (10), zum axialen Anschlag des Schiebekörpers (5) insbesondere in der zweiten Position, und/oder eine stromabseitige Anschlaganordnung (8), zum axialen Anschlag des Schiebekörpers (5) insbesondere in der ersten Position, angeordnet ist/sind.

8. Düse (1) nach einem der vorhergehenden Ansprüche,
**dadurch gekennzeichnet,**
**dass** in der zweiten Kraftstoffleitung (301), insbesondere an der der zumindest einen Anschlaganordnung (8, 10) gegenüberliegenden Wandung (303, 304), ein radialer Vorsprung (9) mit einer derartigen radialen Höhe angeordnet ist, dass in der ersten Position in Zusammenwirken mit dem Schiebekörper (5), insbesondere mit der stromaufseitigen Schulter (500), eine fluiddichte Versperrung innerhalb der zweiten Kraftstoffleitung (301) gebildet ist.

9. Düse (1) nach Anspruch 6 und 8,
**dadurch gekennzeichnet,**
**dass** in der zweiten Position der radiale Vorsprung (9) im axialen Bereich des Mittelstegs (501) und von der stromaufseitigen Schulter (500) und/oder von der stromabseitigen Schulter (502) beabstandet positioniert ist,
wobei insbesondere die axiale Ausdehnung des radialen Vorsprungs (9) kleiner ist als die axiale Ausdehnung des Mittelstegs (501).

10. Düse (1) nach einem der Ansprüche 6 bis 8,
**dadurch gekennzeichnet,**
**dass** die radiale Höhe (H1) der stromaufseitigen Schulter (500) geringer ist als die radiale Höhe (H2) der stromabseitigen Schulter (502) und/oder dass eine radiale Höhe (h1) der stromaufseitigen Anschlaganordnung (10) und/oder eine radiale Höhe (h3) der stromabseitigen Anschlaganordnung (8) geringer ist/sind als eine radiale Höhe (h2) des radialen Vorsprungs (9) und/oder
**dass** die radiale Höhe (h1) der stromaufseitigen Anschlaganordnung (10) und/oder die radiale Höhe (h3) der stromabseitigen Anschlaganordnung (8) maximal 0,2 x H1, vorzugsweise maximal 0,15 x H1 beträgt.

11. Düse (1) nach einem der vorhergehenden Ansprüche,
**dadurch gekennzeichnet,**
**dass** bei Anordnung des Schiebekörpers (5) an der Außenwandung (304) zumindest ein Verbindungskanal (120) zwischen dem Luftkanal (6) und der zweiten Kraftstoffleitung (301) vorhanden ist, mit einem in der Außenwandung (304) gebildeten ersten Abschnitt (121) und mit einem in dem Schiebekörper (5), insbesondere in dem Mittelsteg (501), gebildeten zweiten Abschnitt (122), deren einander zugewandte Öffnungen in der ersten Position zur Öffnung des Verbindungskanals (120) zur Fluidleitung übereinanderliegen und in der zweiten Position zum Verschluss des Verbindungskanals (120), insbesondere axial, versetzt zueinander angeordnet sind, wobei der erste Abschnitt (121) mittels des Schiebekörpers (5), insbesondere mittels des Mittelstegs (501), verschlossen ist.

12. Düse (1) nach einem der vorhergehenden Ansprüche,
**dadurch gekennzeichnet,**
**dass** an mit Kraftstoff überströmten Wandabschnitten zumindest bereichsweise eine Beschichtung (14) zur Vermeidung der Anhaftung von Kraftstoffresten, z. B. Teflon, vorhanden ist.

13. Düse (1) nach einem der vorhergehenden Ansprüche,
**dadurch gekennzeichnet,**
**dass** zwischen dem außen um die Kraftstoffzufuhreinheit (4) umlaufenden Luftkanal (6) und der Kraftstoffzufuhreinheit zumindest ein Hitzeschutz (11), beispielsweise zumindest ein innerhalb einer Außenwandung (304) angeordneter, z. B. mit Luft gefüllter Hohlraum, vorhanden ist.

14. Düse (1) nach einem der vorhergehenden Ansprüche,
**dadurch gekennzeichnet,**
**dass** eine gemeinsame Kraftstoffzuleitung (15) vorhanden ist, die stromauf oder innerhalb des Düsenhauptkörpers (100) auf die zentrale Kraftstoffleitung (201) und die zweite Kraftstoffzuleitung (201) aufgezweigt ist.

15. Triebwerk mit mindestens einer Düse (1) nach einem der vorhergehenden Ansprüche.
